# EUROPEAN PATENT APPLICATION

(11) **EP 2 610 512 A1**
(43) Date of publication of application: **03.07.2013**
(21) Application number: 11195910.2
(22) Date of filing: 28.12.2011
(51) Int. Cl.: F16C 33/46, F16C 33/48, F16C 33/51, F16C 19/38

(54) **Rolling element bearing**

(71) Applicant: Siemens Aktiengesellschaft, 80333 München (DE)
(72) Inventor: Soerensen, Steffen, 8382 Hinnerup (DK); Stiesdal, Henrik, 5000 Odense C (DK)

(57) **Abstract**

The invention relates to a rolling element type bearing, a bearing cage to be used in this bearing and to a wind turbine.
Bearing
- wherein the bearing cage (7) comprises at least two cross bars (8) and at least two side bars (9),
- wherein the side bars (9) connect the cross bars (8) at their ends,
- wherein two adjacent cross bars (8) and the connected side bars (9) form a chamber (13,14) that is prepared to at least partially surround a rolling element (6),
- wherein the cross bars (8) of a chamber (13,14) comprise protrusions (10) that abut on the rolling element (6) in the chamber (13,14),
- wherein the protrusions (10) of the cross bars (8) limit the opening (12) of the chamber (13) that points towards the second surface (4),
- wherein the bearing cage (7) maintains a predefined position between the surfaces (4,5) of the bearing shells, thus the bearing cage (7) is arranged in a contactless manner to the first surface (4) and the second surface (5).

## Description

The invention relates to a rolling element type bearing, a bearing cage to be used in this bearing and to a wind turbine.

A bearing comprises a first bearing shell, a second bearing shell and a rolling element that is arranged between the first and the second bearing shell. The rolling elements separate the bearing shells and move along a raceway of the bearing shells when the bearing is in use. The rolling element is held and guided in a bearing cage.

The bearing cage is used in a bearing to maintain a certain distance between two adjacent rolling elements in the bearing. In addition it enables the movement of the rolling elements. Rolling elements, that are in the load zone, move due to the rotation of the bearing and roll along the raceway. Rolling elements that are not within the load zone are not moved by the rotation of the bearing. In this case the bearing cage helps to move the rolling elements in the bearing.

A bearing cage surrounds one, some or all rolling elements present in the bearing. A bearing cage provides a chamber for each rolling element. The chamber is open towards the raceways, so that the rolling element can get in contact with the raceways and can move along the raceways.

The bearing cage must be guided to maintain a predefined position of the chamber between the surfaces of the bearing shells. When the bearing cage surrounds two or more rolling elements, the bearing cage can be guided by the rolling elements.

The shape of the surface of the chamber, that is in contact with the rolling element, ensures that the rolling element can not slide out of the chamber at its open ends. So the position of the chamber and the rolling element are fixed in respect to each other. Thus the bearing cage can not slide towards one of the surfaces of the bearing shells.

To achieve this, the bearing cage must be machined within narrow tolerances and would typically be machined of steel, brass or bronze. This shows the disadvantage that the material is very cost expensive. In addition the cage must be machined out of a full piece. This leads to a loss of material and is time consuming and labor intensive.

The second solution to guide the bearing cage is to manufacture a cage that can be made of plastic and is completely or partially guided by noses that are in contact to the raceway and slide along the raceway when the bearing is in use.

EP1408248 describes a cage for a roller bearing that is made of a plastic material and comprises several segments. The cross-bars of the cage comprise noses to guide the segments on the raceway of the roller bearing.

This shows the disadvantage that the noses of the cross bars slide along the raceway of the bearing, which is problematic for grease lubricated bearings. The noses can remove the grease from a part of the raceway. This can lead to an improper lubrication, a higher friction and a higher wear at the rolling element and the raceways of the bearing.

In addition the guidance of the bearing cage by noses sliding along the raceways of the bearing results in additional loads within the bearing. This additional load can be excessive when a high number of rolling elements is outside of the load zone and have to be pushed by the bearing cage. This is especially the case in bearings with a larger diameter and a higher number of rolling elements, e.g. more then 50 rolling elements. The additional load is transferred from the baring cage over the noses to the raceway and the surface of the bearing shells. This leads to a higher wear of the bearing cage and the noses, to a higher wear of the bearing surface and to a higher friction in the bearing.

It is the aim of the invention to provide a bearing with an improved bearing cage.

The aim is reached by the features of the independent claim. Preferred embodiments of the invention are described in the dependent claims.

A bearing comprises a first bearing shell with a first surface and a second bearing shell with a second surface. At least two rolling elements are present, that are arranged between the bearing shells in a way, that the rolling elements are in contact with a part of the first surface and while the rolling elements are in contact with a part of the second surface when the bearing is used. The bearing comprises a bearing cage, which at least partially surrounds at least one rolling element. The bearing cage is prepared to maintain a certain predetermined distance between two adjacent rolling elements. The bearing cage is built in a way that a first rolling element supports the bearing cage to maintain a certain predetermined minimum distance to the first surface, while it allows a variation of the distance between the bearing cage and the second surface. The bearing cage is built in a way that a second rolling element supports the bearing cage to maintain a certain predetermined minimum distance to the second surface, while it allows a variation in the distance between the bearing cage and the first surface.

In the bearing the rolling elements are guided by a bearing cage. The bearing cage comprises at least two rolling elements. A rolling element is surrounded by the bearing cage preferably at four sides, whereby the side pointing to the first and the second bearing shell is open, so that the rolling element can get in contact with the raceway.

The bearing cage is built in a way that a first rolling element supports the bearing cage to maintain a certain predetermined minimum distance to the first surface, while it allows a variation of the distance between the bearing cage and the second surface.

The bearing cage can move along the first rolling element towards the second surface, while at the same time is can not slide in the direction towards the first surface.

Thus the first rolling element is maintaining a certain predetermined distance between the bearing cage and the first surface.

The bearing cage is built in a way that it can move along a second rolling element towards the first surface but not towards the second surface.

Thus the second rolling element is supporting the bearing cage to maintain a certain predetermined distance to the second surface.

The first rolling element can move in the bearing cage in the direction towards the first surface. The movement of the first rolling element in the direction towards the first surface is only limited by the first surface itself.

Thus the first rolling element can move into and out of the bearing cage when the bearing cage is not in the bearing or the bearing is open.

The second rolling element can move in the bearing cage in the direction towards the second surface. The movement of the second rolling element in the direction towards the second surface is only limited by the second surface itself.

Thus the second rolling element can move into and out of the bearing cage when the bearing cage is not in the bearing or the bearing is open.

Thus the rolling elements can be installed in the bearing cage without opening or dismantling the bearing cage. The rolling elements can be installed into the bearing cage without the need of closing the bearing cage thereafter. The surfaces of the bearing shells keep the rolling elements in the bearing cage after the bearing cage is installed in the bearing.

Thus a certain tolerance is provided for the rolling element to move towards the first or the second surface in the bearing. Thus stress and higher friction in the bearing, when the bearing is in use can be reduced.

Thus the rolling elements are moved along in the bearing by the bearing cage and a certain predetermined distance between the rolling elements is provided.

In a preferred embodiment the bearing cage is prepared to maintain a predefined position between the surfaces of the bearing shells, thus the bearing cage is arranged in a contactless manner to the first surface and the second surface.

Thus the bearing cage moves along in the bearing together with and supported by the rolling elements. Thus the bearing cage is moving contactless to the first and second surface. Thus friction and higher wear by a contact between the bearing cage and the surface of the bearing shells in the bearing is avoided.

In a preferred embodiment the bearing is a roller bearing.

Roller bearings have a very large contact area between the rolling elements and the surfaces of the bearing shells. Rollers are used in bearings that transfer a high load. In a bearing that transfers a high load, a continuous lubrication and a reduced friction is very important. Defects in the lubrication or high friction can lead very fast to a failure of the bearing.

By using a bearing with a bearing cage invented, the lubrication of the bearing is improved and the friction in the bearing is reduced. Thus the wear is reduced. Thus the lifetime of the bearing is enhanced. Thus service costs are reduced. Thus service time is reduced.

In a preferred embodiment the bearing is a tapered bearing.

Tapered bearings are used in situations where the bearing has to transfer high bending moments. In this situation a continuous lubrication within the bearing is important to avoid excessive wear in the bearing.

Without any contact between the bearing cage and the surfaces of the bearing shells the lubrication is continuous and undisturbed. Thus the lubrication is enhanced.

In addition the friction in the bearing is reduced. Thus the wear is reduced. Thus the lifetime of the bearing is enhanced. Thus service costs are reduced. Thus service time is reduced.

In a preferred embodiment the bearing cage is segmented.

Especially in larger bearings or in situations where the accessibility to the bearing is limited, installation or exchange of the whole bearing cage as one piece is difficult or impossible. In this situation a segmented bearing is very advantageous.

Thus single segments of the bearing cage can be exchanged. Thus heavy dismantling of the machinery can be avoided, as parts are easier to exchange or install then a closed loop of a bearing cage.
Thus service time is saved. Thus service personnel are saved.

Especially in bigger bearings the bearing cage can be heavy. The parts of a segmented bearing cage are lighter then a full bearing cage. Thus heavy machinery to lift and install a bearing cage is avoided. Thus installation time of the machinery is saved.

In a preferred embodiment a segment of a bearing cage comprises at least one rolling element and two adjacent segments of the bearing cage are connected by connecting means.

A segment of a bearing cage is built to provide a chamber for one, two or more rolling elements.

Thus the segment can be quite small, easy to install and/or easy to transport. Thus single segments can be exchanged during service, when an exchange is necessary due to wear of the parts.

Thus the segments can be produced as identical parts or parts that are quite similar.

The segments of the bearing cage can be connected by the help of appropriate connecting means. Thus forces can be transferred from one segment to the next, if necessary.

In a preferred embodiment the bearing cage comprises at least three rolling elements.

To avoid a contact of the bearing cage with the first and second surface at least three chambers are necessary. This bearing cage needs a first chamber, a second chamber and a third chamber. The first chamber is supporting the rolling element in respect to the second surface. The second chamber is supporting the rolling element in respect to the first surface, and the third chamber is supporting the rolling element in respect to the second surface. Thus the bearing cage can not move along the rolling element toward the first or the second surface.

Thus a contact between the bearing cage and the first or the second surface is avoided. Thus also a tilting movement of the bearing cage, and by this a potential contact to the surfaces is avoided.

Thus the lubrication on the first and second surface is not disturbed. Thus wear in the bearing is reduced. Thus the lifetime of the bearing is increased.

The rolling element in the first and the third chamber can move towards the first surface. The rolling element in the second chamber can move towards the second surface. The rolling elements can evade forces or stress in the bearing by moving towards one of the surfaces.

Thus stress in the bearing and the baring cage can be reduced. Thus wear in the bearing can be reduced. Thus the reliability of the bearing can be enhanced. Thus service time and costs of exchange parts can be saved.

A bearing cage is prepared to be used in a bearing, wherein the bearing cage and comprises at least one chamber, which is prepared to at least partially surround at least one rolling element. The chamber comprises at least two openings. A first opening is arranged to point towards the first surface and a second opening is arranged to point towards the second surface of the respective bearing shell, thus a contact of the allocated rolling element with the first surface and the second surface is allowed. The first opening of the chamber is formed in a way that the rolling element, which is allocated to the chamber, is movable from a specified position towards the first surface. The second opening of the chamber is formed in a way that the rolling element, which is allocated to the chamber, is supported in its specified position towards the second surface.

The first opening of the chamber of the bearing cage is formed in a way that the allocated rolling element is not supported in its specified position. The rolling element present in the chamber can move from its specified position towards the first opening and back to its specified position in the chamber.

In a bearing cage that comprises more then one chamber for a rolling element stress between the rolling elements and the bearing cage can develop when the bearing is in use. This is the case, when the rolling element is guided in the bearing cage and can not leave its predetermined specified position in the bearing cage. This stress leads to higher forces between the rolling element and the bearing cage or the surfaces of the bearing shells. Stress and higher forces leads to higher friction in the bearing and to higher wear. Higher wear leads to a shorter service interval and higher costs for service and exchange parts.

In the bearing cage described the rolling element can leave its specified position in the chamber of the bearing cage. Thus the rolling element can evade forces acting on the rolling element in the bearing. Thus stress in the bearing cage can be reduced. Thus higher friction and higher wear can be avoided. Thus the reliability of the bearing can be increased.

Thus a higher demand for service can be avoided. Thus costs for service and exchange parts can be saved.

In a preferred embodiment the bearing cage comprises at least two cross bars and at least two side bars. The side bars connect the cross bars at their ends. Two adjacent cross bars and the connected side bars form a chamber that is prepared to at least partially surround a rolling element. The cross bars of a chamber comprise protrusions that abut on the rolling element in the chamber. The protrusions of the cross bars limit the opening of the chamber that points towards the second surface.

The bearing cage is guided by the protrusions that abut on the rolling elements. Thus the bearing cage can not slide along the rolling element towards the first surface. Thus the bearing cage maintains a predetermined minimum distance to the first surface.

The bearing cage is not in contact with the raceway of the bearing shell. Thus the lubrication along the raceway is not influenced by a distance element. Thus the lubrication stays evenly distributed on the raceways. Thus additional wear due to uneven distribution of the lubrication is avoided. Thus the live-time of the rolling element in the bearing is increased.

In a preferred embodiment the bearing cage comprises a series of at least a first, a second and a third chamber in a row of chambers in the bearing cage. The chambers are prepared to at least partially surround a rolling element. The chambers comprise at least two openings. A first opening of the chambers points towards the first surface and a second opening of the chambers points towards the second surface to allow contact of the rolling element, which is allocated to the chamber, with the first surface and the second surface. The first opening of the first and the third chamber is formed in a way that the allocated rolling element, which is arranged in a specified position within the chamber, is supported towards the second surface. The second opening of the first and the third chamber is formed in a way that the allocated rolling element, which is arranged in the specified position within the chamber is movable from the specified position towards the first surface. The first opening of the second chamber is formed in a way that the allocated rolling element, which is arranged in a specified position within the chamber, is supported towards the first surface. The second opening of the second chamber is formed in a way that the allocated rolling element, which is arranged in the specified position within the chamber is movable from the specified position towards the second surface.

To avoid a contact of the bearing cage with the first and second surface of a bearing at least three chambers in the bearing cage are necessary. This bearing cage comprises a first chamber, a second chamber and a third chamber. The first chamber is supporting the rolling element in respect to the second surface. The second chamber is supporting the rolling element in respect to the first surface, and the third chamber is supporting the rolling element in respect to the second surface. Thus, installed in a bearing, the bearing cage can not move along the rolling element toward the first or the second surface.

Thus a contact between the bearing cage and the first or the second surface is avoided. Thus also a tilting movement of the bearing cage, and by this a potential contact to the surfaces is avoided.

The rolling element in the first and the third chamber can move towards the first surface. The rolling element in the second chamber can move towards the second surface. The rolling elements can evade forces or stress in the bearing by moving towards one of the surfaces.

Thus stress in the bearing and the baring cage can be reduced. Thus wear in the bearing can be reduced. Thus the reliability of the bearing can be enhanced. Thus service time and costs of exchange parts can be saved.

In a preferred embodiment the bearing cage is casted of bronze or brass or steel.

Bronze or brass or steel are very rigid materials. Thus the bearing cage made of brass or bronze or steel is rigid enough to withstand wear in the bearing. Thus the service interval for the bearing can be increased. Thus service costs are saved.

In a preferred embodiment the bearing cage is molded with a thermoplastic material.

The thermoplastic material can be a high grade fiber reinforced thermoplastic, for example, such as PEEK.

Thus the bearing cage is light weight. Thus no heavy machinery is needed for installation or exchange of the bearing cage.

In addition the material and the manufacturing of the bearing cage are inexpensive.

The bearing cage can be molded or casted in one piece. Thus production time and installation time is saved.

A wind turbine comprises a bearing described.

Bearings are an important part in wind turbines. When low friction and good lubrication is provided in the bearings, the bearings can run for a longer time until the next service is necessary. Thus the service interval can be enlarged. Thus service time is saved. Thus the energy production of the wind turbine is increased.

Especially wind turbines that are installed offshore can not be reached very easily. Reliability is very important for these wind turbines. When an improved lubrication and reduced friction and wear can be provided, the reliability of the bearing is increased. Thus the break down time of the wind turbine is reduced. Thus the energy production is increased. And also maintenance costs are reduced.

In a preferred embodiment the wind turbine is a direct driven wind turbine.

Direct driven wind turbines have bearings that run with a very low speed and have to transfer high loads, as bending moments. In this case a sufficient lubrication of the bearing is very important. In addition a minimized friction in the bearing is important. With the bearing and bearing cage invented the reliability of the lubrication is increased. Thus especially in a direct driven wind turbine the reliability of the bearing is increased. Thus the efficiency of the wind turbine is increased. Thus the cost of energy is lowered.

In a preferred embodiment the bearing is the main bearing of the wind turbine.

In a construction of a wind turbine where one bearing is used as a main bearing, this one main bearing transfers all the loads of the rotor. These are radial loads, axial loads and bending moments. In this case a very good lubrication of the bearing is necessary. Also additional friction in the bearing should be avoided to reduce the loss of energy transferred and reduce warming and wear of the bearing. With the bearing described the lubrication is significantly improved and the friction within the bearing is reduced. Thus the reliability of the wind turbine is improved. Thus the efficiency of the wind turbine is improved. Thus the energy production is increased. Thus the costs of the energy produced are reduced.

The invention is shown in more detail by help of figures. The figures show a preferred configuration and do not limit the scope of the invention.
- FIG 1: shows a bearing cage according to the claims.
- FIG 2a: shows a cut through a bearing cage for a roller bearing.
- FIG 2b: shows a bearing cage for a roller bearing in a perspective view.
- FIG 3: shows a tapered roller bearing with a bearing cage according to the claims.

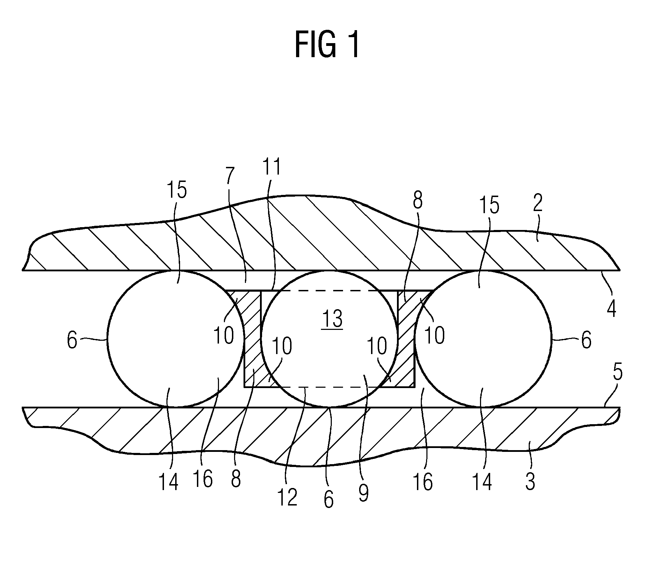

FIG 1 shows a cut-out of a roller bearing with a first bearing shell 2 with a first surface 4 and a second bearing shell 3 with a second bearing shell 5. Between the first surface 4 and the second surface 5 are three rollers 6.

Between the rollers 6 a bearing cage 7 is shown. The bearing cage 7 is a segment of a full bearing cage. The bearing cage 7 comprises chambers 13, 14 that partially surround one roller 6 each. The bearing cage 7 comprises two cross bars 8. The cross bars maintain a certain predetermined distance between the rollers 6. The cross bars 8 are connected by side bars 9. The cross bars 8 and the side bars 9 build the chambers 13, 14 that at least partially surround the roller 6.

The chambers 13, 14 comprise a first opening 11, 15 that allows the roller 6 to get in contact with the first surface 4. In addition there is a second opening 12, 16 that allows the roller 6 to get in contact with the second surface 5.
The cross bars 8 of the bearing cage 7 comprise protrusions 10.
In the chamber 13 the roller 6 can move from a predetermined position in the bearing cage 7 in the direction towards the first opening 11 relative to the bearing cage 7. The protrusions narrow the second opening 12, so that the roller 6 can not move in the direction of the second opening 12 relative to the bearing cage 7.

So the bearing cage 7 can move along the roller 6 towards the second surface 5, but not towards the first surface 4. The protrusions 10 in the second opening 12 of the second chamber 13 hinder the bearing cage 7 to move towards the first surface 4.

The bearing cage 7 comprises two additional chambers 14 that partially surround two rollers 6. The rollers 6 are in contact with the cross bars 8. The protrusions 10 at the cross bars 8 hinder the bearing cage 7 to move towards the second surface 5. So the three rollers 6 keep the bearing cage 7 in a predetermined position between the first surface 4 and the second surface 5.

The other side of the two additional rollers 6 can abut on the next segment of a bearing cage 7.

At the same time the roller 6 can be mounted in the bearing cage 7 through the wider opening of the chamber 13, 14 of the bearing cage 7. The rollers 6 can also be exchanged without the need to dismantle parts of the bearing cage 7.

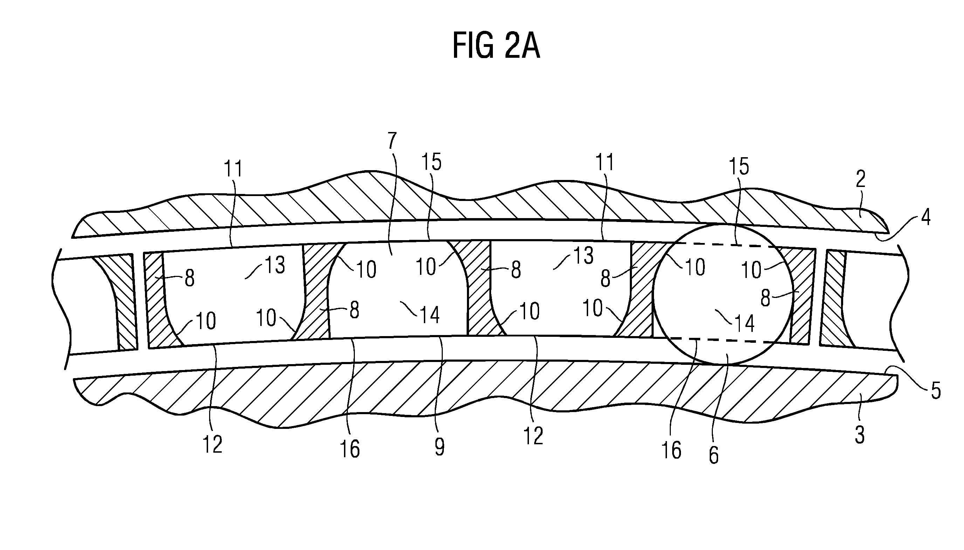

FIG 2a shows in another embodiment described a cut through a bearing cage for a roller bearing.

The bearing cage 7 shows four chambers for four rollers 6. One of the rollers 6 is shown in the figure.

The bearing cage 7 comprises cross bars 8 and side bars 9. The side bars 9 connect the cross bars 8 at their ends. The cross bars 8 and the side bars 9 build chambers 13, 14 for the rollers 6. The chambers show two openings 11, 12, 15, 16 to allow the roller 6 to get in contact with the first surface 4 and the second surface 5.

The cross bars 8 comprise protrusions 10. The protrusions 10 narrow one of the openings in the chamber. The protrusions abut on the rollers 6 in the chamber. The protrusions 10 in every second chamber 13 of the bearing cage 7 hinder the bearing cage to move along the roller 6 towards the first surface 4. The protrusions 10 in every other chamber 14 hinder the bearing cage 7 to move along the roller 6 towards the second surface 5.

At least three chambers 13, 14 with protrusions 10 are necessary to maintain the bearing cage 7 in a predetermined position between the two surfaces 4, 5. The openings 12, 15 of the chambers 13, 14 that are narrowed by the protrusions 10 are alternately facing the first and the second surface 4, 5 of the bearing shells 2, 3.

The bearing cage 7 is guided by the rollers 6. It is guided contactless to the two surfaces 4, 5 and moves along in the bearing by the movement of the rollers 6.

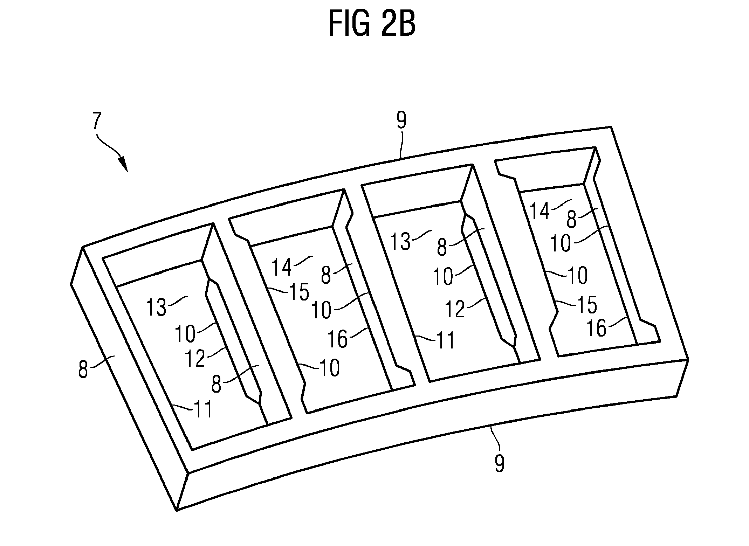

FIG 2b shows a bearing cage for a roller bearing in a perspective view.

The bearing cage 7 shows four chambers 13, 14 provided to guide one roller each. In this embodiment the bearing cage 7 shows five cross bars 8 that are present between the rollers and two side bars 9 that connect the cross bars 8 at their ends.

The bearing cage 7 can also be build for a different number of rolling elements, starting from one to all of the rolling elements in the bearing.

The cross bars 8 show protrusions 10 that abut on the rollers present in the chambers of the bearing cage 7. One chamber 13 shows the protrusions 10 at the lower opening 12 of the cross bars 8, that is facing the second surface 5 when the bearing cage 7 is mounted in the bearing 1. The next chamber 14 shows the protrusions 10 at the upper opening 15 of the cross bars 8, that is the opening facing the first surface 5.

The protrusions 10 narrow the upper or lower openings 12, 15 of the chamber 13, 14. A rolling element present in the chamber 13, 14 can move from a predetermined position in the chamber 13, 14 into the direction of the opening 11, 16 with the normal width towards one of the surfaces of the bearing 1. The rolling element is hindered by the protrusions that narrow the other openings 12, 15 to move towards the other surface of the bearing.

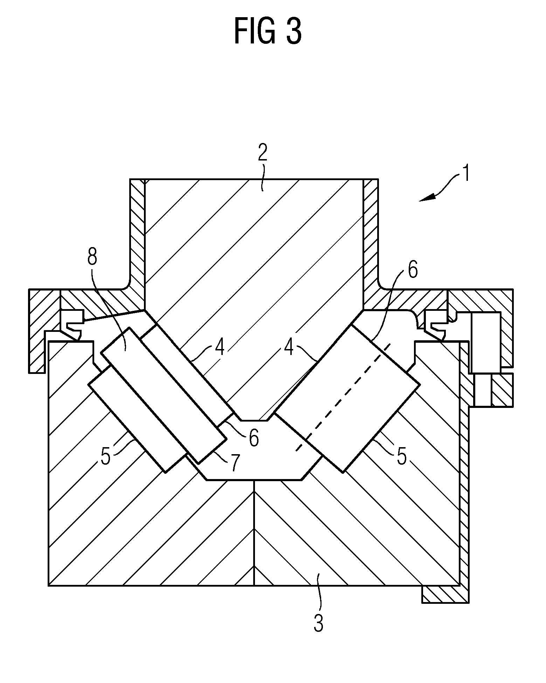

FIG 3 shows a tapered roller bearing with a bearing cage according to the claims.

The bearing 1 comprises a first bearing shell 2 and a second bearing shell 3. Two rows of rollers 6 are present between the bearing shells 2, 3. The rollers 6 contact a part of the first surface 4 and the second surface 5. The rollers 6 are guided by a bearing cage 7 that partially surrounds the rollers 6.

The bearing cage 7 shows a cross bar 8 that is arranged mainly parallel to the axis of rotation of the roller 6. This cross bar 8 maintains the distance between two neighboring rollers 6 and assists to move the rollers 6 that are not in the load zone and are therefore not moved by the rotation of the bearing 1 itself.

The bearing cage 7 in Fig 3 maintains in a certain predetermined position between the first surface 4 and the second surface 5. The bearing cage 7 maintains the position without getting in contact to the first or the second surface 4, 5.

## Claims

1. Bearing (1) comprising
- a first bearing shell (2) with a first surface (4),
- a second bearing shell (3) with a second surface (5),
- at least two rolling elements (6), that are arranged between the bearing shells (2, 3) in a way, that the rolling elements (6) are in contact with a part of the first surface (4) and while the rolling elements are in contact with a part of the second surface (5) when the bearing (1) is used,
- a bearing cage (7), which at least partially surrounds at least one rolling element (6),
- wherein the bearing cage (7) is prepared to maintain a certain predetermined distance between two adjacent rolling elements (6),
- wherein the bearing cage (7) is built in a way that a first rolling element (6) supports the bearing cage (7) to maintain a certain predetermined minimum distance to the first surface (4), while it allows a variation of the distance between the bearing cage (7) and the second surface (5),
- wherein the bearing cage (7) is built in a way that a second rolling element (6) supports the bearing cage (7) to maintain a certain predetermined minimum distance to the second surface (5), while it allows a variation in the distance between the bearing cage (7) and the first surface (4).

2. Bearing (1) according to claim 1, wherein the bearing cage (7) is prepared to maintain a predefined position between the surfaces (4, 5) of the bearing shells, thus the bearing cage (7) is arranged in a contactless manner to the first surface (4) and the second surface (5).

3. Bearing (1) according to claim 1 or 2, wherein the bearing (1) is a roller bearing.

4. Bearing (1) according to one of the preceding claims, wherein the bearing (1) is a tapered bearing.

5. Bearing (1) according to one of the preceding claims, wherein the bearing cage (7) is segmented.

6. Bearing (1) according to claim 5, wherein a segment of a bearing cage (7) comprises at least one rolling element (6) and two adjacent segments of the bearing cage (7) are connected by connecting means.

7. Bearing (1) according to one of the preceding claims, wherein the bearing cage (7) comprises at least three rolling elements (6).

8. Bearing cage (7), which is prepared to be used in a bearing (1) according to one of the preceding claims,
- wherein the bearing cage (7) comprises at least one chamber (13), which is prepared to at least partially surround at least one rolling element (6),
- wherein the chamber (13) comprises at least two openings (11, 12),
- wherein a first opening (11) is arranged to point towards the first surface (4) and a second opening (12) is arranged to point towards the second surface (5) of the respective bearing shell (2, 3) thus a contact of the allocated rolling element (6) with the first surface (4) and the second surface (5) is allowed,
- wherein the first opening (11) of the chamber (13) is formed in a way that the rolling element (6), which is allocated to the chamber (13), is movable from a specified position towards the first surface (4),
- wherein the second opening (12) of the chamber is formed in a way that the rolling element (6), which is allocated to the chamber (13) is supported in its specified position towards the second surface (5).

9. Bearing cage (7) according to claim 8,
- wherein the bearing cage (7) comprises at least two cross bars (8) and at least two side bars (9),
- wherein the side bars (9) connect the cross bars (8) at their ends,
- wherein two adjacent cross bars (8) and the connected side bars (9) form a chamber (13, 14) that is prepared to at least partially surround a rolling element (6),
- wherein the cross bars (8) of a chamber (13, 14) comprise protrusions (10) that abut on the rolling element (6) in the chamber (13, 14),
- wherein the protrusions (10) of the cross bars (8) limit the opening (12) of the chamber (13) that points towards the second surface (4).

10. Bearing cage (7) according to claim 8,
- wherein the bearing cage (7) comprises a series of at least a first, a second and a third chamber (13, 14) in a row of chambers in the bearing cage,
- wherein the chambers (13, 14) are prepared to at least partially surround a rolling element (6),
- wherein the chambers (13, 14) comprise at least two openings (11, 12, 15, 16),
- wherein a first opening (11, 15) of the chambers (13, 14) points towards the first surface (4) and a second opening (12, 15) of the chambers (13, 14) points towards the second surface (5) to allow contact of the rolling element (6), which is allocated to the chamber (13, 14), with the first surface (4) and the second surface (5),
- where the first opening (11) of the first and the third chamber (13) is formed in a way that the allocated rolling element (6), which is arranged in a specified position within the chamber (13), is supported towards the second surface (4),
- where the second opening (12) of the first and the third chamber (13) is formed in a way that the allocated rolling element (6), which is arranged in the specified position within the chamber (13) is movable from the specified position towards the first surface (5),
- where the first opening (15) of the second chamber (14) is formed in a way that the allocated rolling element (6), which is arranged in a specified position within the chamber (14), is supported towards the first surface (4),
- where the second opening (16) of the second chamber (14) is formed in a way that the allocated rolling element (6), which is arranged in the specified position within the chamber (14) is movable from the specified position towards the second surface (5).

11. Bearing cage (7) according to one of the claims 8, 9 or 10, wherein the bearing cage (7) is casted of bronze or brass or steel.

12. Bearing cage (7) according to one of the claims 6 or 7, wherein the bearing cage (7) is molded with a thermoplastic material.

13. Wind turbine comprising a bearing (1) according to the claims 1 to 7.

14. Wind turbine according to claim 13, wherein the wind turbine is a direct driven wind turbine.

15. Wind turbine according to one of the claims 13 or 14, wherein the bearing is the main bearing of the wind turbine.
